# EUROPÄISCHE PATENTSCHRIFT

(11) **EP 3 266 681 B1**
(45) Veröffentlichungstag und Bekanntmachung des Hinweises auf die Patenterteilung: **02.09.2020**
(21) Anmeldenummer: 17176768.4
(22) Anmeldetag: 20.06.2017
(51) Int. Cl.: B62D 15/02, B60W 30/06, G08G 1/16, B60W 50/14

(54) **VERFAHREN ZUM BESTIMMEN EINER TRAJEKTORIE EINES KRAFTFAHRZEUGS MIT BEREITSTELLUNG EINER AUSGABE, VERFAHREN ZUM MANÖVRIEREN EINES KRAFTFAHRZEUGS, FAHRERASSISTENZSYSTEM SOWIE KRAFTFAHRZEUG**
METHOD FOR DETERMINING A TRAJECTORY OF A MOTOR VEHICLE WITH PROVISION OF A READOUT, METHOD FOR MANOEUVRING A MOTOR VEHICLE, DRIVER ASSISTANCE SYSTEM AND MOTOR VEHICLE
PROCÉDÉ DE DÉTERMINATION D'UNE TRAJECTOIRE D'UN VÉHICULE AUTOMOBILE AVEC FOURNITURE D'UNE SORTIE, PROCÉDÉ DESTINÉ À MAN UVRER UN VÉHICULE AUTOMOBILE, SYSTÈME D'ASSISTANCE AU CONDUCTEUR ET VÉHICULE AUTOMOBILE

(30) Priorität: 07.07.2016 DE 102016112498
(43) Veröffentlichungstag der Anmeldung: 10.01.2018
(73) Patentinhaber: Valeo Schalter und Sensoren GmbH, 74321 Bietigheim-Bissingen (DE)
(72) Erfinder: Joos, Malte, 74321 Bietigheim-Bissingen (DE); Sattler, Stefanie, 74321 Bietigheim-Bissingen (DE); Heimberger, Markus, 74321 Bietigheim-Bissingen (DE)
(74) Vertreter: Pothmann, Karsten

(56) Entgegenhaltungen:
- DE-A1-102005 009 703
- DE-A1-102011 107 974
- JP-A- H08 278 150
- JP-A- S60 108 709

## Beschreibung

Die vorliegende Erfindung betrifft ein Verfahren zum Bestimmen einer Trajektorie eines Kraftfahrzeugs, bei welchem während das Kraftfahrzeug manuell von einem Fahrer manövriert wird, bei einem Vorhandensein eines Startsignals anhand von Sensordaten, welche eine Bewegung des Kraftfahrzeugs beschreiben, eine Aufzeichnung der Trajektorie gestartet wird, wobei für die Aufzeichnung der Trajektorie eine Maximalwegstrecke vorgegeben ist. Des Weiteren betrifft die vorliegende Erfindung ein Verfahren zum Manövrieren eines Kraftfahrzeugs. Darüber hinaus betrifft die vorliegende Erfindung ein Fahrerassistenzsystem für ein Kraftfahrzeug. Schließlich betrifft die vorliegende Erfindung ein Kraftfahrzeug.

Das Interesse richtet sich vorliegend auf die Bestimmung bzw. auf die Aufzeichnung einer Trajektorie eines Kraftfahrzeugs. Beispielsweise kann die Trajektorie aufgezeichnet werden, während der Fahrer das Kraftfahrzeug manuell manövriert. Eine solche Trajektorie kann als Referenz-Trajektorie für ein nachfolgend durchgeführtes Manöver dienen, bei welchem das Kraftfahrzeug zumindest semi-autonom entlang der Trajektorie manövriert wird. Beispielsweise kann die Trajektorie für das sogenannte trainierte Parken verwendet werden. Hierbei aktiviert der Fahrer des Kraftfahrzeugs beispielsweise eine Aufnahmefunktion und manövriert das Kraftfahrzeug anschließend manuell. Beispielsweise kann der Fahrer das Kraftfahrzeug entlang einer Auffahrt bewegen und anschließend in eine Garage einparken. Nachdem das gewünschte Ziel erreicht ist, kann die aufgenommene Trajektorie gespeichert werden. Sobald sich das Kraftfahrzeug wieder in der Nähe der gespeicherten Trajektorie befindet, kann ein Einparkvorgang aktiviert werden, bei dem das Kraftfahrzeug zumindest semi-autonom entlang der aufgezeichneten Trajektorie manövriert wird.

Hierzu beschreibt die DE 10 2011 107 974 A1 ein Verfahren zum Rangieren eines Fahrzeugs in einem Umfeld, wobei in einem Lernmodus das Fahrzeug einen Referenz-Rangiervorgang in dem Umfeld durchführt, welcher abgespeichert wird. In einem nach dem Lernmodus vom Fahrzeug zumindest semi-autonom durchzuführenden Wiederhol-Rangieren in diesem Umfeld wird der abgespeicherte Referenz-Rangiervorgang für das Wiederhol-Rangieren berücksichtigt.

Darüber hinaus sind aus dem Stand der Technik Verfahren bekannt, bei denen intern die Trajektorie ständig aufgezeichnet wird. Wenn der Fahrer anschließend das Fahrerassistenzsystem aktiviert, kann dieses das Kraftfahrzeug entlang der gespeicherten Trajektorie in entgegengesetzter Fahrtrichtung zurückmanövrieren. Ein solches Verfahren, welches auch als Back Drive Assist bezeichnet wird, kann beispielsweise dazu genutzt werden, das Kraftfahrzeug entlang der Trajektorie in eine Parklücke zu bewegen und anschließend das Kraftfahrzeug wieder entlang der gleichen Trajektorie in entgegengesetzter Fahrtrichtung aus der Parklücke herauszubewegen.

Hierzu beschreibt DE 10 2005 009 703 A1 eine Parkhilfsvorrichtung für ein Fahrzeug mit einer Erfassungseinheit zum Erfassen einer zurückgelegten Wegstrecke mit einem Speicher zum Speichern der zurückgelegten Wegstrecke und mit einer Ansteuereinheit für eine Fahrzeuglenkung, wobei das Fahrzeug von der Ansteuereinheit entlang der gespeicherten Wegstrecke ausgehend von einem Endpunkt der gespeicherten Wegstrecke automatisch zurückgeführt wird. Hierbei kann es vorgesehen sein, dass eine Fahrstrecke bis zu einer Gesamtlänge von beispielsweise 5 Metern aufgezeichnet werden kann. Wird die Länge der maximal speicherbaren Fahrstrecke überschritten kann eine Warnung an den Fahrer ausgegeben werden.

Bei den bekannten Verfahren zum Bestimmen bzw. Aufzeichnen der Trajektorie ist der Start der Aufzeichnung beispielsweise durch das Aktivieren einer entsprechenden Aufnahmefunktion durch den Fahrer gegeben. Bei dem sogenannten Back Drive Assist ist der Startpunkt beispielsweise durch die festgelegte Maximalwegstrecke gegeben. Hierbei kann es vorgesehen sein, dass sich der Start der Aufzeichnung verschiebt oder überschrieben wird. Dies kann beispielsweise der Fall sein, wenn die maximale Aufnahmekapazität eines Speichers, auf dem die Trajektorie gespeichert wird, erreicht ist. Es kann auch vorgesehen sein, dass das Fahrerassistenzsystem die Maximalwegstrecke vorgibt. Der Start der Aufzeichnung kann sich beispielsweise auch dadurch verschieben, dass die Aufzeichnung neu gestartet wird. Dies ist beispielsweise der Fall, wenn der Fahrer das Kraftfahrzeug mit einer überhöhten Geschwindigkeit bewegt hat und somit eine zuverlässige Aufzeichnung der Trajektorie nicht möglich war.

Die JP S60 108709 A zeigt eine Positionsdatenspeichervorrichtung, mit einem Wegsensor, einem Azimuthsensor, einem Signalprozessor, einer Wegstreckaufzeichnungsvorrichtung, einer Ausgabevorrichtung und einer Steuervorrichtung. Weiterhin ist eine Skala vorgesehen, die als Speichertabelle zum Speichern von Positionsdaten ausgebildet ist.

Die JP H08 278150 A zeigt eine weitere Positionsdatenspeichervorrichtung.

Es ist Aufgabe der vorliegenden Erfindung, eine Lösung aufzuzeigen, wie eine Trajektorie eines Kraftfahrzeugs zuverlässiger bestimmt werden kann. Darüber hinaus soll ein entsprechendes Verfahren zum Manövrieren eines Kraftfahrzeugs, ein Fahrerassistenzsystem sowie ein Kraftfahrzeug bereitgestellt werden.

Diese Aufgabe wird durch die Merkmale des Anspruchs 1 gelöst. Erfindungsgemäß werden ein Verfahren zum Bestimmen einer Trajektorie, ein Verfahren zum Manövrieren eines Kraftfahrzeugs, ein Fahrerassistenzsystem sowie ein Kraftfahrzeug mit den Merkmalen gemäß den jeweiligen unabhängigen Ansprüchen vorgeschlagen. Vorteilhafte Weiterbildungen der vorliegenden Erfindung sind Gegenstand der abhängigen Ansprüche.

Bei einer Ausführungsform eines Verfahrens zum Bestimmen einer Trajektorie eines Kraftfahrzeugs wird insbesondere während das Kraftfahrzeug manuell von einem Fahrer manövriert wird, bei einem Vorhandensein eines Startsignals anhand von Sensordaten, welche bevorzugt eine Bewegung des Kraftfahrzeugs beschreiben, eine Aufzeichnung der Trajektorie gestartet. Dabei wird für die Aufzeichnung der Trajektorie bevorzugt eine Maximalwegstrecke vorgegeben. Bevorzugt wird dem Fahrer während des manuellen Manövrierens des Kraftfahrzeugs eine Ausgabe bereitgestellt, welche beschreibt, welche Wegstrecke das Kraftfahrzeug seit dem Start der Aufzeichnung der Trajektorie zurückgelegt hat.

Ein erfindungsgemäßes Verfahren dient zum Bestimmen einer Trajektorie eines Kraftfahrzeugs. Hierbei wird während das Kraftfahrzeug manuell von einem Fahrer manövriert wird, bei einem Vorhandensein eines Startsignals anhand von Sensordaten, welche eine Bewegung des Kraftfahrzeugs beschreiben, eine Aufzeichnung der Trajektorie gestartet, wobei für die Aufzeichnung der Trajektorie eine Maximalwegstrecke vorgegeben wird. Während des manuellen Manövrierens des Kraftfahrzeugs wird dem Fahrer eine Ausgabe bereitgestellt, welche beschreibt, welche Wegstrecke das Kraftfahrzeug seit dem Start der Aufzeichnung der Trajektorie zurückgelegt hat.

Mithilfe des Verfahrens kann eine Trajektorie aufgezeichnet bzw. bestimmt werden, welche eine Bewegungsbahn des Kraftfahrzeugs beschreibt. Diese Trajektorie wird aufgenommen, während das Kraftfahrzeug von dem Fahrer des Kraftfahrzeugs manuell manövriert wird. Bei dem manuellen Manövrieren betätigt der Fahrer des Kraftfahrzeugs das Lenkrad, das Gaspedal, das Bremspedal und/oder eine Schaltung des Kraftfahrzeugs. Die Bewegung des Kraftfahrzeugs bzw. die zurückgelegte Trajektorie, welcher der Fahrer bei dem manuellen Manövrieren vorgibt, soll nun in Form der aufgezeichnet werden. Dabei wird die Aufzeichnung der Trajektorie gestartet, wenn ein vorbestimmtes Startsignal vorhanden ist. Dieses Startsignal kann beispielsweise vorhanden sein, wenn der Fahrer des Kraftfahrzeugs ein Bedienelement betätigt. Es kann auch vorgesehen sein, dass das Startsignal bei dem Erreichen einer vorbestimmten Wegstrecke ausgeben wird. Für die Aufzeichnung bzw. für die Bestimmung der Trajektorie werden Sensordaten von zumindest einem Sensor des Kraftfahrzeugs herangezogen. Bei diesem zumindest einen Sensor kann es sich beispielsweise um einen Sensor handeln, welcher die Umdrehungen zumindest eines Rads des Kraftfahrzeugs erfassen kann. Darüber hinaus kann der zumindest eine Sensor fortlaufend einen Lenkwinkel des Kraftfahrzeugs bestimmen. Somit kann auf Grundlage von Odometrie die Bewegung des Kraftfahrzeugs während des manuellen Manövrierens fortlaufend bestimmt werden. Ferner können die Sensordaten Objekte in der Umgebung bzw. markante Streckenpunkte entlang der Trajektorie beschreiben.

Für die Aufzeichnung der Trajektorie ist eine Maximalwegstrecke vorgegeben, welche gespeichert werden kann. Es wird also ein Maximalwert für die Wegstrecke, welche die bei Manövrieren entlang der Trajektorie mit dem Kraftfahrzeug zurückgelegte Distanz beschreibt, vorgegeben. Beispielsweise kann die Trajektorie zunächst bestimmt werden und anschließend in einen Speicher übertragen werden. Die Maximalwegstrecke kann beispielsweise durch eine Ausgestaltung eines Speichers gegeben sein, auf welchem die Trajektorie gespeichert wird. Die Maximalwegstrecke kann auch durch die Ausgestaltung des Fahrerassistenzsystems bzw. der Funktion gegeben sein. Nachdem die Trajektorie aufgezeichnet wurde, kann diese für ein nachfolgendes Manöver verwendet werden, bei welchem das Kraftfahrzeug zumindest semi-autonom entlang der Trajektorie manövriert wird.

Gemäß einem wesentlichen Aspekt der vorliegenden Erfindung ist es vorgesehen, dass während des manuellen Manövrierens des Kraftfahrzeugs eine Ausgabe ausgegeben wird. Diese Ausgabe beschreibt die Wegstrecke, welche das Kraftfahrzeug seit dem Start der Aufzeichnung der Trajektorie zurückgelegt hat. Diese Ausgabe wird an den Fahrer des Kraftfahrzeugs ausgegeben. Diese Ausgabe kann akustisch, beispielsweise in Form einer entsprechenden Ansage, ausgegeben werden. Bevorzugt ist es aber vorgesehen, dass die Ausgabe an den Fahrer des Kraftfahrzeugs optisch ausgegeben wird. Somit kann der Fahrer des Kraftfahrzeugs einerseits darüber informiert werden, dass die Aufzeichnung der Trajektorie gestartet wurde und die Trajektorie aktuell aufgezeichnet wird. Darüber hinaus erhält der Fahrer eine Information darüber, welche Wegstrecke bzw. welche Distanz das Kraftfahrzeug seit dem Start der Aufzeichnung der Trajektorie bzw. seit dem Vorhandensein des Startsignals bereits zurückgelegt hat. Dabei beschreibt die Ausgabe insbesondere die Wegstrecke entlang der aufgezeichneten Trajektorie. Damit wird dem Fahrer des Kraftfahrzeugs eine Information darüber bereitgestellt, welche die aktuelle Aufzeichnung der Trajektorie beschreibt. Somit wird eine geeignete Schnittstelle zu dem Fahrer bereitgestellt, welche erstmals Informationen bezüglich der Aufzeichnung der Trajektorie bereitstellt. Somit erhält der Fahrer eine Rückmeldung darüber, welche Trajektorie tatsächlich aufgezeichnet wurde. Da genau diese Trajektorie bei einem nachfolgenden semi-autonomen Manöver nach gefahren wird, kann somit die Sicherheit gesteigert werden.

Weiterhin ist es vorteilhaft, wenn eine Ausgabe bereitgestellt wird, welche zusätzlich einen Grund für das Vorhandensein des Startsignals beschreibt. Mit anderen Worten soll der Fahrer des Kraftfahrzeugs darüber informiert werden, warum das Startsignal vorhanden war bzw. warum die Aufzeichnung der Trajektorie gestartet wurde. Auch hier ist es insbesondere vorgesehen, dass diese Ausgabe optisch wiedergegeben wird. Eine solche Ausgabe kann beispielsweise in Form eines Textes bereitgestellt werden. Beispielsweise kann die Ausgabe beschreiben, dass eine Aufnahmefunktion aktiviert wurde oder dass ein entsprechendes Bedienelement oder ein Startknopf gedrückt wurde. Die Anzeige kann den Fahrer auch darüber informieren, dass eine maximale Distanz bzw. Wegstrecke erreicht wurde und somit die Aufzeichnung gestartet wurde. Somit kann der Fahrer des Kraftfahrzeugs auch darüber informiert werden, warum die Aufzeichnung der Trajektorie gestartet wurde. Zudem dient die Anzeige dazu, den Fahrer zuverlässig darüber zu informieren, dass die Aufzeichnung tatsächlich gestartet wurde.

Es wird als die Ausgabe eine optische Anzeige ausgegeben, welche die zurückgelegte Wegstrecke in einem Verhältnis zu der Maximalwegstrecke anzeigt. Die Ausgabe, welche an den Fahrer ausgegeben wird, kann also eine optische Anzeige umfassen. Die optische Anzeige kann beispielsweise auf einer Anzeigeeinrichtung oder einem Bildschirm im Innenraum des Kraftfahrzeugs angezeigt werden. Somit kann dem Fahrer des Kraftfahrzeugs auf einfache und verständliche Weise mitgeteilt werden, welcher Anteil der maximal aufzeichenbaren Trajektorie bereits aufgenommen wurde und welche Wegstrecke ihm für die Aufzeichnung noch zur Verfügung steht. Somit kann der Fahrer die Aufzeichnung der Trajektorie im Vergleich zu bekannten Verfahren, bei denen lediglich das Überschreiten der Maximalwegstrecke angezeigt wird, besser planen.

Gemäß einer weiteren Ausführungsform wird als die optische Anzeige ein erstes Balkenelement, wobei eine Länge des ersten Balkenelements die zurückgelegte Wegstrecke beschreibt, und ein zweites Balkenelement, wobei eine Länge des zweiten Balkenelements eine bis zum Erreichen der Maximalwegstrecke verbleibende Wegstrecke beschreibt, angezeigt werden. Mit anderen Worten kann die Anzeige der zurückgelegten Wegstrecke und der verbleibenden Wegstrecke in Form einer Balkenanzeige erfolgen. Dabei sind das erste Balkenelement und das zweite Balkenelement bei der optischen Anzeige bevorzugt entlang ihrer Haupterstreckungsrichtung hintereinander angeordnet. Die Länge des ersten Balkenelements beschreibt die bereits zurückgelegte Wegstrecke bzw. die aufgezeichnete Trajektorie und das zweite Balkenelement beschreibt die noch zur Verfügung stehende Wegstrecke für die Aufzeichnung der Trajektorie. Während des Manövrierens des Kraftfahrzeugs bzw. während der Aufzeichnung der Trajektorie können die Längen des ersten und des zweiten Balkenelements fortlaufend angepasst werden. Beispielsweise kann die Länge des ersten Balkenelements erhöht und die Länge des zweiten Balkenelements reduziert werden. Somit kann dem Fahrer des Kraftfahrzeugs während der Aufnahme auf einfache Weise die verbleibende Wegstrecke bzw. die Restdistanz angezeigt werden.

Gemäß einer weiteren Ausgestaltung werden Wegpunkte als die optische Anzeige angezeigt, welche die zurückgelegte Wegstrecke beschreiben, wobei eine Anordnung der Wegpunkte einen Verlauf der aufgenommenen Trajektorie beschreibt. Dabei kann es auch vorgesehen sein, dass erste Wegpunkte angezeigt werden, welche die zurückgelegte Wegstrecke beschreiben und weitere Wegpunkte angezeigt werden, welche die bis zum Erreichen der Maximalwegstrecke verbleibende Wegstrecke beschreiben. Dabei ist es insbesondere vorgesehen, dass die Anordnung der Wegpunkte den Verlauf der aufgenommenen Trajektorie als zweidimensionalen Pfad beschreibt. Die dargestellten Wegpunkte können also diskrete Punkte der aufgezeichneten Trajektorie zweidimensional abbilden. Grundsätzlich kann es auch vorgesehen sein, dass als die optische Anzeige eine Kurve angezeigt wird, welche den Verlauf der aufgezeichneten Trajektorie beschreibt. Auf diese Weise wird dem Fahrer die bereits aufgenommene Trajektorie visualisiert. Dies gibt dem Fahrer eine genaue Information darüber, welche Trajektorie bereits aufgenommen wurde.

Weiterhin ist es vorteilhaft, wenn bei dem Ausgeben der optischen Anzeige ein Startpunkt angezeigt wird, welcher den Start der Aufzeichnung der Trajektorie beschreibt. Die optische Anzeige kann also ein Symbol umfassen, welche den Startpunkt der Aufzeichnung beschreibt. Die Anzeige kann auch derart ausgestaltet sein, dass diese ein Symbol, welches die aktuelle Position des Kraftfahrzeugs beschreibt, umfasst. Zudem kann die optische Anzeige ein Symbol umfassen, welches das Ende der Maximalwegstrecke beschreibt. Dies ermöglicht eine einfache und zuverlässige Information über die aufgenommene und noch zur Verfügung stehende Wegstrecke bei der Aufzeichnung der Trajektorie.

Gemäß einer weiteren Ausgestaltung wird bei einem Neustart der Aufzeichnung der Trajektorie die Anzeige des Startpunkts aktualisiert und die zurückgelegte Wegstrecke ausgehend von dem aktualisierten Startpunkt dargestellt. Während der Aufzeichnung der Trajektorie kann es der Fall sein, dass die Aufzeichnung neu gestartet wird bzw. zurückgesetzt wird. Dies kann beispielsweise der Fall sein, wenn das Kraftfahrzeug während der Aufzeichnung mit einer überhöhten Geschwindigkeit manövriert wird oder ein zu geringer Kurvenradius gewählt wird. In diesem Fall kann eine zuverlässige Aufzeichnung der Bewegung des Kraftfahrzeugs und somit die Bestimmung der Trajektorie nicht gewährleistet werden. Dies ist insbesondere dadurch begründet, da neben der Aufzeichnung von Odometriedaten auch charakteristische Streckenpunkte in der Umgebung des Kraftfahrzeugs während der Aufzeichnung der Trajektorie bestimmt werden. Wenn die Aufzeichnung der Trajektorie neu gestartet wird bzw. zurückgesetzt wird, wird dies dem Fahrer dadurch kenntlich gemacht, dass die Anzeige des Startpunkts aktualisiert wird bzw. ein aktualisierter Startpunkt dargestellt wird. Ferner kann es vorgesehen sein, dass an den Fahrer ein entsprechender Hinweis ausgegeben wird, welcher beschreibt, dass die Aufzeichnung neu gestartet wurde. Ferner kann dem Fahrer der Grund dafür angezeigt werden, warum die Aufzeichnung neu gestartet wurde. Dies ermöglicht eine zuverlässige Information für den Fahrer bei dem Neustart der Aufzeichnung.

In einer weiteren Ausgestaltung wird bei einer Überschreitung der Maximalwegstrecke der Start der Aufzeichnung der Trajektorie um eine Differenzwegstrecke verschoben, um welche die Maximalwegstrecke überschritten wird. Wenn bei der Aufzeichnung der Trajektorie die Maximalwegstrecke erreicht wird bzw. überschritten wird, ist es insbesondere vorgesehen, dass die Aufzeichnung der Trajektorie nicht abgebrochen wird, sondern fortgeführt wird. Hierbei verschiebt sich allerdings der Start der Aufzeichnung um den gleichen Betrag bezüglich der Wegstrecke, um welchen der Fahrer über die Maximalwegstrecke hinaus gefahren ist. Auf diese Weise kann insgesamt die Maximalwegstrecke bei der Aufzeichnung der Trajektorie berücksichtigt werden. Zudem wird dadurch erreicht, dass die Aufzeichnung der Trajektorie beispielsweise nicht neu gestartet werden muss. Beispielsweise kann die Maximalwegstrecke 50 m beträgt. Wenn ein Fahrer, der die Trajektorie zu seiner Garage aufzeichnen möchte, die Aufnahme der Trajektorie aber bereits 52 m vor der Garage startet, ist es nicht mehr erforderlich, dass die Aufnahme der Trajektorie wiederholt werden muss. Der Start der Aufzeichnung der Trajektorie verschiebt sich um die Differenzwegstrecke, vorliegend um 2 m. Zudem wird der Fahrer darüber informiert, dass sich der Startpunkt der Aufzeichnung verschoben hat.

Vorzugsweise ist es vorgesehen, dass die Verschiebung des Starts der Aufzeichnung in der optischen Anzeige durch die Verschiebung des Startpunkts angezeigt wird. Über die Verschiebung des Starts der Aufzeichnung kann der Fahrer mithilfe der optischen Anzeige dadurch informiert werden, dass der Startpunkt verschoben wird bzw. die Anzeige des Startpunkts verändert wird. Darüber hinaus kann ein entsprechender Hinweis ausgegeben werden, der den Fahrer darüber informiert, dass er die Maximalwegstrecke überschritten hat. Insbesondere ist es vorgesehen, dass die Anzeige den Fahrer darüber informiert, wo sich der verschobene Startpunkt bzw. der aktualisierte Startpunkt befindet. Damit wird der Fahrer zuverlässig darüber informiert, wo sich der Startpunkt bzw. der Beginn der aufgezeichneten Trajektorie befindet. Somit wird es dem Fahrer auf zuverlässige Weise ermöglicht, zu einem späteren Zeitpunkt das Manöver einzuleiten, bei welchem das Kraftfahrzeug zumindest semi-autonom entlang der aufgezeichneten Trajektorie manövriert wird.

Weiterhin ist es vorteilhaft, wenn eine vor dem Verschieben des Starts der Aufzeichnung zurückgelegte Wegstrecke, welche sich von dem ursprünglichen Startpunkt zu dem verschobenen Startpunkt erstreckt, angezeigt wird. Wenn es infolge der Überschreitung der Maximalwegstrecke zu einer Verschiebung des Startpunkts kommt, kann wie bereits erläutert der Startpunkt in der Anzeige verschoben werden. Dabei ist es insbesondere vorgesehen, dass diejenige Wegstrecke angezeigt wird, die infolge der Verschiebung des Startpunkts nun nicht mehr aufgezeichnet wird. Damit wird der Fahrer darüber informiert, welcher Teil der Wegstrecke bzw. der Trajektorie infolge der Überschreitung der Maximalwegstrecke bei der Aufzeichnung der Trajektorie nicht mehr berücksichtigt wird.

Die Erfindung betrifft auch ein Verfahren zum Manövrieren eines Kraftfahrzeugs. Hierbei wird das Kraftfahrzeug zumindest semi-autonom entlang einer Trajektorie manövriert, welche gemäß einem erfindungsgemäßen Verfahren zum Bestimmen der Trajektorie oder einer vorteilhaften Ausgestaltung davon bestimmt wurde. Nach dem Bestimmen der Trajektorie kann das Kraftfahrzeug semi-autonom entlang der Trajektorie manövriert werden. Hierzu greift das Fahrerassistenzsystem derart eine Lenkung des Kraftfahrzeugs ein, dass das Kraftfahrzeug entlang der bestimmten Trajektorie gelenkt wird. Der Fahrer des Kraftfahrzeugs betätigt dabei weiterhin das Gaspedal, das Bremspedal und/oder den Gangwahlhebel. Es kann auch vorgesehen sein, dass das Kraftfahrzeug vollautonom entlang der bestimmten Trajektorie manövriert wird. In diesem Fall steuert das Fahrerassistenzsystem auch das Bremssystem oder den Antriebsmotor des Kraftfahrzeugs.

Gemäß einer Ausführungsform wird das Kraftfahrzeug entlang der Trajektorie in einer ersten Fahrtrichtung manövriert wird, falls das Kraftfahrzeug beim Bestimmen der Trajektorie in einer zur ersten Fahrtrichtung entgegengesetzt gerichteten, zweiten Fahrtrichtung bewegt wurde. Somit kann die Funktion des sogenannten Back Drive Assist bereitgestellt werden, bei dem das Kraftfahrzeug entlang der aufgezeichneten Trajektorie in entgegengesetzter Fahrtrichtung manövriert wird. Wenn das Kraftfahrzeug beim Bestimmen der Trajektorie beispielsweise in Vorwärtsfahrtrichtung bewegt wurde, kann das Kraftfahrzeug beim zumindest semi-autonomen Manövrieren in Rückwärtsfahrtrichtung bewegt werden und umgekehrt. Beispielsweise kann das Kraftfahrzeug beim Aufnehmen der Trajektorie vorwärts manuell in eine Parklücke eingeparkt werden und anschließend rückwärts zumindest semi-autonom wieder aus der Parklücke ausgeparkt werden.

Gemäß einer weiteren Ausgestaltung wird das Kraftfahrzeug entlang der bestimmten Trajektorie manövriert wird, falls der Startpunkt der Trajektorie in der Umgebung des Kraftfahrzeugs erkannt wird. Die aufgezeichnete Trajektorie kann beispielsweise den Weg in eine Garage bzw. zu einem Stellplatz beschreiben, in welcher bzw. auf welchem der Fahrer das Kraftfahrzeug üblicherweise parkt. Falls erkannt wird, dass sich das Kraftfahrzeug an dem Startpunkt der aufgezeichneten Trajektorie befindet, kann das Kraftfahrzeug zumindest semi-autonom entlang der Trajektorie manövriert werden. Damit kann der Fahrer bei wiederkehrenden Fahrmanövern unterstützt werden. Es kann auch vorgesehen sein, dass die Trajektorie mehrfach aufgezeichnet wird und somit das Manövrieren entlang der Trajektorie quasi trainiert wird. Auf diese Weise kann die Funktion des sogenannten trainierten Parkens bereitgestellt werden.

Ein erfindungsgemäßes Fahrerassistenzsystem für ein Kraftfahrzeug umfasst ein Steuergerät und eine Ausgabeeinrichtung. Das Fahrerassistenzsystem ist dazu ausgelegt, ein erfindungsgemäßes Verfahren oder eine vorteilhafte Ausgestaltung davon durchzuführen. Das Steuergerät kann beispielsweise Sensordaten von zumindest einem Sensor empfangen, wobei die Sensordaten die Bewegung des Kraftfahrzeugs beschreiben. Bei der Ausgabeeinrichtung kann es sich insbesondere um eine Anzeigeeinrichtung, beispielsweise einen Bildschirm oder dergleichen, handeln.

Das Fahrerassistenzsystem ist insbesondere dazu ausgelegt, die Trajektorie während des manuellen Manövrierens aufzuzeichnen bzw. zu bestimmen. Alternativ oder zusätzlich ist das Fahrerassistenzsystem dazu ausgelegt, das Kraftfahrzeug nach dem Aufzeichnen der Trajektorie entlang der aufgezeichneten Trajektorie zumindest semi-autonom zu manövrieren.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren zum Bestimmen einer Trajektorie vorgestellten bevorzugten Ausführungsformen und deren Vorteile gelten entsprechend für das erfindungsgemäße Verfahren zum Manövrieren des Kraftfahrzeugs, das erfindungsgemäße Fahrerassistenzsystem sowie für das erfindungsgemäße Kraftfahrzeug.

Weitere Merkmale der Erfindung ergeben sich aus den Ansprüchen.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches ein Fahrerassistenzsystem zum Aufzeichnen einer Trajektorie aufweist;
- Fig. 2a-2e: unterschiedliche Anzeigen in Form von Balken, welche während der Aufzeichnung der Trajektorie dargestellt werden; und
- Fig. 3a-3c: unterschiedliche Anzeigen in Form von Wegpunkten, welche während der Aufzeichnung der Trajektorie angezeigt werden.

In den Figuren werden gleiche und funktionsgleiche Elemente mit den gleichen Bezugszeichen versehen.

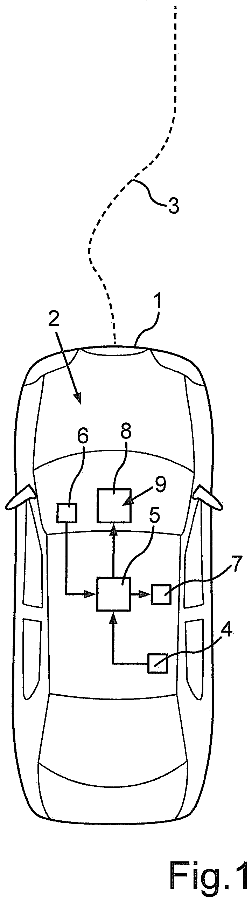

Fig. 1 zeigt ein Kraftfahrzeug 1 gemäß einer Ausführungsform der vorliegenden Erfindung in einer Draufsicht. Das Kraftfahrzeug 1 ist vorliegend als Personenkraftwagen ausgebildet. Das Kraftfahrzeug 1 umfasst ein Fahrerassistenzsystem 2, welches dazu dient, einen Fahrer des Kraftfahrzeugs 1 beim Führen des Kraftfahrzeugs 1 zu unterstützen. Mithilfe des Fahrerassistenzsystems 2 kann das Kraftfahrzeug 1 zumindest semi-autonom manövriert werden. Hierzu kann das Fahrerassistenzsystem 2 in eine Lenkung des Kraftfahrzeugs 1 eingreifen. Darüber hinaus kann es vorgesehen sein, dass das Fahrerassistenzsystem 2 einen Antriebsmotor des Kraftfahrzeugs 1 ansteuert und/oder in ein Bremssystem des Kraftfahrzeugs 1 eingreift.

Das Kraftfahrzeug 1 soll zumindest semi-autonom entlang einer Trajektorie 3 manövriert werden, welche zuvor aufgenommen bzw. aufgezeichnet wird. Dabei kann der Fahrer das Kraftfahrzeug 1 entlang der Trajektorie 3, welche vorliegend beispielhaft dargestellt ist, manuell manövrieren und hierbei die Trajektorie 3 aufzeichnen. Um die Trajektorie 3 aufzeichnen zu können, weist das Fahrerassistenzsystem 2 einen Sensor 4 auf. Mit dem Sensor 4 können Sensordaten bereitgestellt werden, welche die Bewegung des Kraftfahrzeugs 1 beschreiben. Beispielsweise können die Sensordaten die Umdrehung zumindest eines Rades des Kraftfahrzeugs 1 und/oder einen zeitlichen Verlauf des Lenkwinkels des Kraftfahrzeugs 1 beschreiben. Die mit dem Sensor 4 bereitgestellten Sensordaten werden an ein elektronisches Steuergerät 5 übertragen. Das Steuergerät 5 kann die Sensordaten entsprechend bearbeiten bzw. auswerten.

Das Fahrerassistenzsystem 2 umfasst ferner ein Bedienelement 6, welches beispielsweise durch eine Taste oder einen Schalter in dem Innenraum des Kraftfahrzeugs 1 bereitgestellt werden kann. Wenn das Bedienelement 6 von dem Fahrer des Kraftfahrzeugs 1 betätigt wird, wird ein Startsignal ausgegeben, infolgedessen die Aufzeichnung der Trajektorie 3 gestartet wird. Die Trajektorie 3 wird mithilfe des Steuergeräts 5 auf Grundlage der Sensordaten, die von dem Sensor 4 bereitgestellt werden, bestimmt. Nach dem Beenden der Aufnahme kann dann die bestimmte bzw. aufgezeichnete Trajektorie 3 bzw. Daten, welche die Trajektorie 3 beschreiben, auf einem Speicher 7 des Fahrerassistenzsystems 2 gespeichert werden.

Das Fahrerassistenzsystem 2 umfasst ferner eine Ausgabeeinrichtung 8, mittels welcher dem Fahrer des Kraftfahrzeugs 1 während der Aufzeichnung der Trajektorie 3 eine Ausgabe bereitgestellt werden kann. Als Ausgabe kann dem Fahrer insbesondere eine optische Anzeige 9 bereitgestellt werden. Hierzu ist die Ausgabeeinrichtung 8 insbesondere als Anzeigeelement bzw. als Bildschirm ausgebildet. Die optische Anzeige 9, die dem Fahrer angezeigt wird, beschreibt insbesondere eine Wegstrecke, die seit dem Start der Aufzeichnung der Trajektorie 3 mit dem Kraftfahrzeug 1 bereits zurückgelegt wurde. Ferner kann die optische Anzeige eine Maximalwegstrecke beschreiben. Die Maximalwegstrecke ist diejenige Wegstrecke, die bei dem Aufzeichnen der Trajektorie 3 maximal aufgezeichnet werden kann. Beispielsweise kann die Maximalwegstrecke 50 m betragen.

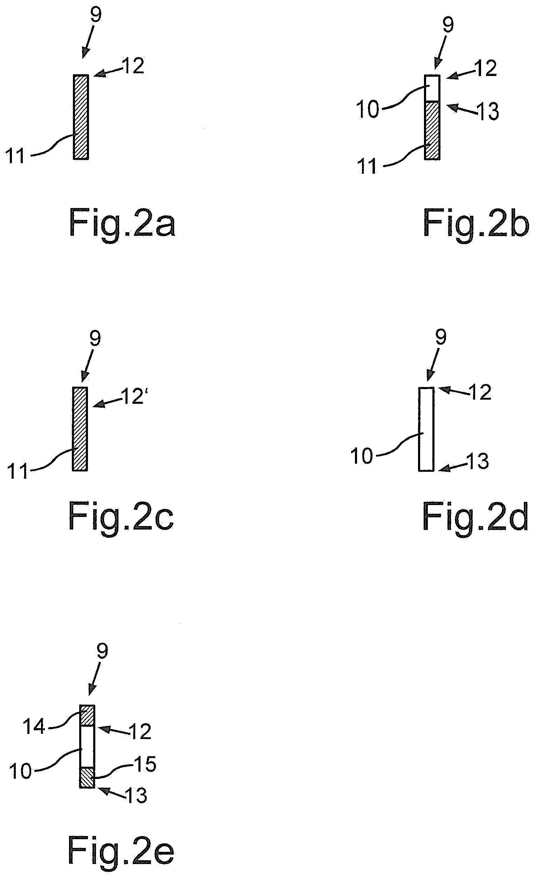

Die Figuren 2a bis 2e beschreiben unterschiedliche optische Anzeigen 9, welche dem Fahrer auf der Ausgabeeinrichtung 8 während der Aufzeichnung der Trajektorie 3 bereitgestellt werden können. Hierbei wird die optische Anzeige 9 in Form einer Balkenanzeige bereitgestellt, welche den Fahrer über die zurückgelegte Wegstrecke und die verbleibende Wegstrecke bei der Aufzeichnung der Trajektorie 3 informieren. Dabei zeigen die Figuren 2a bis 2d ein erstes Balkenelement 10, welches die zurückgelegte Wegstrecke beschreibt und ein zweites Balkenelement 11, welches die verbleibende Wegstrecke beschreibt.

Fig. 2a zeigt die optische Anzeige 9 bei der Aktivierung der Aufzeichnung der Trajektorie 3 bzw. nach dem Betätigen des Bedienelements 6. Hierbei wird nur das zweite Balkenelement 11 dargestellt, da noch keine Wegstrecke bei der Aufzeichnung der Trajektorie 3 zurückgelegt wurde und die Maximalwegstrecke vollständig für die Aufzeichnung zur Verfügung steht. Zudem wird ein Startpunkt 12 angezeigt, welcher den Beginn der Aufnahme anzeigt. Der Startpunkt 12 wird vorliegend durch einen Pfeil symbolisiert. Zusätzlich kann die optische Anzeige 9 den Fahrer über den Grund der Aufnahme der Trajektorie 3 informieren. Hierzu kann zusätzlich zu den Balkenelementen 10, 11 ein Text angezeigt werden.

Fig. 2b zeigt die optische Anzeige 9 zu einem späteren Zeitpunkt der Aufnahme der Trajektorie 3. Hierbei beschreibt das erste Balkenelement 10 bzw. die Länge des ersten Balkenelements 10 die bereits zurückgelegte Wegstrecke bei der Aufnahme der Trajektorie 3. Das zweite Balkenelement 11 bzw. die Länge des zweiten Balkenelements beschreibt die zum Erreichen der Maximalwegstrecke noch zur Verfügung stehende Wegstrecke. Ferner wird eine aktuelle Position 13 des Kraftfahrzeugs 1 in Form des Pfeils angezeigt. Die aktuelle Position 13 beschreibt ebenfalls das Ende der Aufzeichnung der Trajektorie 3.

Während der Aufzeichnung der Trajektorie 3 kann es der Fall sein, dass die Aufzeichnung neu gestartet wird bzw. zurückgesetzt wird. Dies kann beispielsweise der Fall sein, wenn das Kraftfahrzeug 1 während der Aufzeichnung der Trajektorie 3 mit einer überhöhten Geschwindigkeit bewegt wird oder ein zu geringer Kurvenradius gewählt wird. Hierbei wird die Darstellung des Startpunkts 12 aktualisiert bzw. es wird ein aktualisierter Startpunkt 12' dargestellt. Dies ist vorliegend schematisch in Fig. 2c dargestellt. Hier wird analog zu Fig. 2a die zur Verfügung stehende Wegstrecke in Form des zweiten Balkenelements 11 dargestellt. Zudem kann eine entsprechende Anzeige bzw. ein Text angezeigt werden, welcher den Fahrer darüber informiert, dass der Startpunkt beispielsweise in Folge von überhöhter Geschwindigkeit neu gesetzt wurde.

Fig. 2d zeigt die optische Anzeige 9 bei dem Erreichen der Maximalwegstrecke. Hier steht keine Restdistanz für die Aufzeichnung der Trajektorie 3 zur Verfügung, sodass nur das erste Balkenelement 10 angezeigt wird. Diese Anzeige kann auch bereitgestellt werden, wenn die Aufzeichnung der Trajektorie 3 beispielsweise in Folge einer Bedieneingabe an dem Bedienelement 6 beendet wurde.

Fig. 2e zeigt die optische Anzeige 9 für den Fall, dass die Maximalwegstrecke überschritten wurde. In diesem Fall wird der Start der Aufnahme um diejenige Differenzwegstrecke verschoben, um welche die Maximalwegstrecke überschritten wurde. Vorliegend zeigt ein drittes Balkenelement 14 die Wegstrecke von dem ursprünglichen Startpunkt zu dem aktualisierten Startpunkt 12. Somit wird der Fahrer darüber informiert, welcher Bereich der befahrenen Trajektorie 3 nicht aufgezeichnet bzw. gespeichert wird. Zudem wird der Fahrer über verschobenen Startpunkt informiert.

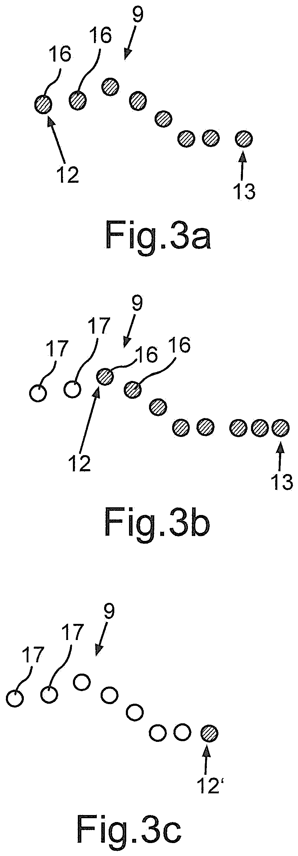

Die Figuren 3a bis 3c zeigen weitere optische Anzeigen 9, die mit der Ausgabeeinrichtung 8 bereitgestellt werden können. Hierbei umfassen die jeweiligen optischen Anzeigen 9 erste Wegpunkte 16, welche die zurückgelegte Wegstrecke beschreiben. Dies ist beispielhaft in Fig. 3a dargestellt. Hier ist zudem zu erkennen, dass die Anordnung der ersten Wegpunkte 16 dem Verlauf der Trajektorie 3 entspricht. Zudem wird in der optischen Anzeige 9 der Startpunkt 12 sowie die aktuelle Position 13 dargestellt. Bei dieser Visualisierung wird dem Fahrer der Startpunkt 12 der Trajektorienaufnahme gegenüber der Balkenanzeige deutlicher dargestellt und somit das Systemverständnis erhöht.

Fig. 3b zeigt eine optische Anzeige 9, für den Fall, dass die Maximalwegstrecke überschritten wurde. Hierbei werden zudem zweite Wegpunkte 17 angezeigt, welche die Differenzwegstrecke zwischen dem ursprünglichen Startpunkt und dem verschobenen bzw. aktualisierten Startpunkt 12 beschreiben. Die zweiten Wegpunkte 17 beschreiben also den Teil der Trajektorie 3 der bereits abgefahren wurde aber nicht aufgezeichnet bzw. gespeichert wurde.

Ferner zeigt Fig. 3c ein Beispiel, bei welchem die Aufzeichnung der Trajektorie 3 neu gestartet wurde und somit der Startpunkt 12 verschoben wurde. In diesem Fall wird die Aufzeichnung ab dem verschobenen Startpunkt 12' gestartet. Auch hier zeigen die zweiten Wegpunkte 17 den Abschnitt der Trajektorie 3, der bereits abgefahren wurde, welche aber nicht aufgezeichnet bzw. gespeichert wurde.

Grundsätzlich können entweder die optischen Anzeigen gemäß den Fig. 2a bis 2e oder die optischen Anzeigen 9 gemäß den Fig. 3a bis 3c angezeigt werden. Es können auch sowohl die optischen Anzeigen 9 gemäß den Fig. 2a bis 2e als auch die optischen Anzeigen 9 gemäß den Fig. 3a bis 3c angezeigt werden. Mithilfe der optischen Anzeigen 9 wird der Fahrer des Kraftfahrzeugs 1 während der Aufzeichnung der Trajektorie 3 darüber informiert, welcher Bereich der Trajektorie 3 aufgezeichnet wurde. Zudem wird dem Fahrer ein Grund angezeigt, warum die Trajektorie 3 aufgezeichnet wurde. Falls sich der Startpunkt 12 infolge eines Neustart der Aufzeichnung verschiebt, wird der Fahrer ebenfalls informiert. Gleiches gilt für den Fall, dass die Maximalwegstrecke überschritten wird.

## Patentansprüche

1. Verfahren zum Bestimmen einer Trajektorie (3) eines Kraftfahrzeugs (1), bei welchem während das Kraftfahrzeug (1) manuell von einem Fahrer manövriert wird, bei einem Vorhandensein eines Startsignals anhand von Sensordaten, welche eine Bewegung des Kraftfahrzeugs (1) beschreiben, eine Aufzeichnung der Trajektorie (3) gestartet wird, wobei für die Aufzeichnung der Trajektorie (3) eine Maximalwegstrecke vorgegeben wird, wobei während des manuellen Manövrierens des Kraftfahrzeugs (1) dem Fahrer eine Ausgabe bereitgestellt wird, welche beschreibt, welche Wegstrecke das Kraftfahrzeug (1) seit dem Start der Aufzeichnung der Trajektorie (3) zurückgelegt hat, **dadurch gekennzeichnet, dass** als die Ausgabe eine optische Anzeige (9) ausgegeben wird, welche die zurückgelegte Wegstrecke in einem Verhältnis zu der Maximalwegstrecke anzeigt.

2. Verfahren nach Anspruch 1,
**dadurch gekennzeichnet, dass**
eine Ausgabe bereitgestellt wird, welche zusätzlich einen Grund für das Vorhandensein des Startsignals beschreibt.

3. Verfahren nach Anspruch 1 oder 2,
**dadurch gekennzeichnet, dass**
als die optische Anzeige (9) ein erstes Balkenelement (10), wobei eine Länge des ersten Balkenelements (10) die zurückgelegte Wegstrecke beschreibt, und ein zweites Balkenelement (11), wobei eine Länge des zweiten Balkenelements (11) eine bis zum Erreichen der Maximalwegstrecke verbleibende Wegstrecke beschreibt, angezeigt werden.

4. Verfahren nach einem der Ansprüche 1 bis 3,
**dadurch gekennzeichnet, dass**
als die optische Anzeige (9) Wegpunkte (16, 17) angezeigt werden, welche die zurückgelegte Wegstrecke beschreiben, wobei eine Anordnung der Wegpunkte (16, 17) einen Verlauf der aufgezeichneten Trajektorie (3) beschreibt.

5. Verfahren nach einem der Ansprüche 1 bis 4,
**dadurch gekennzeichnet, dass**
bei dem Ausgeben der optischen Anzeige (9) ein Startpunkt (12) angezeigt wird, welcher den Start der Aufzeichnung der Trajektorie (3) beschreibt.

6. Verfahren nach Anspruch 5,
**dadurch gekennzeichnet, dass**
bei einem Neustart der Aufzeichnung der Trajektorie (3) die Anzeige des Startpunkts (12) aktualisiert wird und die zurückgelegte Wegstrecke ausgehend von dem aktualisierten Startpunkt (12') dargestellt wird.

7. Verfahren nach Anspruch 5 oder 6,
**dadurch gekennzeichnet, dass**
bei einer Überschreitung der Maximalwegstrecke der Start der Aufzeichnung der Trajektorie (3) um eine Differenzwegstrecke verschoben wird, um welche die Maximalwegstrecke überschritten wird.

8. Verfahren nach Anspruch 7,
**dadurch gekennzeichnet, dass**
die Verschiebung des Starts der Aufzeichnung in der optischen Anzeige (9) durch die Verschiebung des Startpunkts (12) angezeigt wird.

9. Verfahren nach Anspruch 7 oder 8,
**dadurch gekennzeichnet, dass**
eine vor dem Verschieben des Starts der Aufzeichnung zurückgelegte Wegstrecke, welche sich von einem ursprünglichen Startpunkt zu dem aktuellen Startpunkt (12) erstreckt, angezeigt wird.

10. Verfahren zum Manövrieren eines Kraftfahrzeugs (1), bei welchem das Kraftfahrzeug (1) entlang einer Trajektorie (3), welche gemäß einem Verfahren nach einem der Ansprüche 1 bis 9 bestimmt wurde, zumindest semi-autonom manövriert wird.

11. Verfahren nach Anspruch 10,
**dadurch gekennzeichnet, dass**
das Kraftfahrzeug (1) entlang der Trajektorie (3) in einer ersten Fahrtrichtung manövriert wird, falls das Kraftfahrzeug (1) beim Bestimmen der Trajektorie (3) in einer zur ersten Fahrtrichtung entgegengesetzt gerichteten, zweiten Fahrtrichtung bewegt wurde.

12. Verfahren nach Anspruch 10,
**dadurch gekennzeichnet, dass**
das Kraftfahrzeug (1) entlang der bestimmten Trajektorie (3) manövriert wird, falls der Startpunkt (12) der Trajektorie (3) in der Umgebung des Kraftfahrzeugs (1) erkannt wird.

13. Fahrerassistenzsystem (2) für ein Kraftfahrzeug (1), mit einem Steuergerät (5) und mit einer Ausgabeeinrichtung (8), wobei das Fahrerassistenzsystem (2) zum Durchführen eines Verfahrens nach einem der Ansprüche 1 bis 9 und/oder zum Durchführen eines Verfahrens nach einem der Ansprüche 10 bis 12 ausgelegt ist.

14. Kraftfahrzeug (1) mit einem Fahrerassistenzsystem (2) nach Anspruch 13.

## Claims

1. Method for determining a trajectory (3) of a motor vehicle (1), in which, while the motor vehicle (1) is being manoeuvred manually by a driver, a recording of the trajectory (3) is started given the presence of a starting signal, on the basis of sensor data which describe a movement of the motor vehicle (1), wherein a maximum travel distance is predefined for the recording of the trajectory (3), wherein during the manual manoeuvring of the motor vehicle (1) the driver is provided with an output which describes what travel distance the motor vehicle (1) has covered since the start of the recording of the trajectory (3), **characterized in that** a visual display (9), which displays the travel distance covered as a ratio with respect to the maximum travel distance, is output as the output.

2. Method according to Claim 1,
**characterized in that**
an output is made available which additionally describes a reason for the presence of the starting signal.

3. Method according to Claim 1 or 2,
**characterized in that**
a first bar element (10) is displayed as the visual display (9), wherein a length of the first bar element (10) describes the travel distance which has been covered, and a second bar element (11) is displayed as the visual display (9), wherein a length of the second bar element (11) describes a travel distance remaining up to the point when the maximum travel distance is reached.

4. Method according to one of Claims 1 to 3,
**characterized in that**
distance points (16, 17) which describe the travel distance which has been covered are displayed as the visual display (9), wherein an arrangement of the distance points (16, 17) describes a profile of the recorded trajectory (3).

5. Method according to one of Claims 1 to 4,
**characterized in that**
when the visual display (9) is output, a starting point (12) which describes the start of the recording of the trajectory (3) is displayed.

6. Method according to Claim 5,
**characterized in that**
when the recording of the trajectory (3) is restarted, the display of the starting point (12) is updated and the travel distance which has been covered is displayed on the basis of the updated starting point (12').

7. Method according to Claim 5 or 6,
**characterized in that**
when the maximum travel distance is exceeded, the start of the recording of the trajectory (3) is pushed back by a differential travel distance, which is the distance by which the maximum travel distance is exceeded.

8. Method according to Claim 7,
**characterized in that**
the pushing back of the start of the recording in the visual display (9) is displayed by the pushing back of the starting point (12).

9. Method according to Claim 7 or 8,
**characterized in that**
a travel distance which is covered before the pushing back of the start of the recording and which extends from an original starting point to the current starting point (12) is displayed.

10. Method for manoeuvring a motor vehicle (1), in which the motor vehicle (1) is manoeuvred at least semi-autonomously along a trajectory (3) which has been determined in accordance with a method according to one of Claims 1 to 9.

11. Method according to Claim 10,
**characterized in that**
the motor vehicle (1) is manoeuvred along the trajectory (3) in a first travel direction if the motor vehicle (1) has been moved in a second travel direction which is directed opposite to the first travel direction when determining the trajectory (3).

12. Method according to Claim 10,
**characterized in that**
the motor vehicle (1) is manoeuvred along the determined trajectory (3) if the starting point (12) of the trajectory (3) is detected in the surroundings of the motor vehicle (1).

13. Driver assistance system (2) for a motor vehicle (1), having a control unit (5) and having an output device (8), wherein the driver assistance system (2) is configured to carry out a method according to one of Claims 1 to 9 and/or to carry out a method according to one of Claims 10 to 12.

14. Motor vehicle (1) having a driver assistance system (2) according to Claim 13.

## Revendications

1. Procédé de détermination d'une trajectoire (3) d'un véhicule automobile (1), dans lequel, pendant que le véhicule automobile (1) est manœuvré manuellement par un conducteur, en présence d'un signal de démarrage, un enregistrement de la trajectoire (3) est démarré à l'aide de données de capteur décrivant un déplacement du véhicule automobile (1), un trajet maximal étant prédéfini pour l'enregistrement de la trajectoire (3), dans lequel, pendant que le véhicule automobile (1) est manœuvré manuellement, une sortie est fournie au conducteur qui décrit le trajet que le véhicule automobile (1) a parcouru depuis le démarrage de l'enregistrement de la trajectoire (3), **caractérisé en ce qu'**en tant que sortie, un affichage optique (9) est sorti qui affiche le trajet parcouru par rapport au trajet maximal.

2. Procédé selon la revendication 1, **caractérisé en ce qu'**une sortie est fournie qui décrit en plus un motif de la présence du signal de démarrage.

3. Procédé selon la revendication 1 ou 2, **caractérisé en ce que** comme affichage optique (9) sont affichés un premier élément de barre (10), une longueur du premier élément de barre (10) décrivant le trajet parcouru, et un deuxième élément de barre (11), une longueur du deuxième élément de barre (11) décrivant un trajet restant jusqu'à ce que le trajet maximal soit atteint.

4. Procédé selon l'une quelconque des revendications 1 à 3, **caractérisé en ce que** comme affichage optique (9) sont affichés des points de trajet (16, 17) qui décrivent le trajet parcouru, une disposition des points de trajet (16, 17) décrivant un tracé de la trajectoire (3) enregistrée.

5. Procédé selon l'une quelconque des revendications 1 à 4, **caractérisé en ce qu'**un point de départ (12) est affiché lorsque l'affichage optique (9) est sorti, qui décrit le démarrage de l'enregistrement de la trajectoire (3) .

6. Procédé selon la revendication 5, **caractérisé en ce que** dans le cas d'un redémarrage de l'enregistrement de la trajectoire (3), l'affichage du point de départ (12) est mis à jour et le trajet parcouru est représenté à partir du point de départ mis à jour (12') .

7. Procédé selon la revendication 5 ou 6, **caractérisé en ce qu'**en cas de dépassement du trajet maximal, le démarrage de l'enregistrement de la trajectoire (3) est décalé d'un trajet différentiel par lequel le trajet maximal est dépassé.

8. Procédé selon la revendication 7, **caractérisé en ce que** le décalage du démarrage de l'enregistrement est affiché sur l'affichage optique (9) par le décalage du point de départ (12).

9. Procédé selon la revendication 7 ou 8, **caractérisé en ce qu'**un trajet parcouru avant le décalage du démarrage de l'enregistrement est affiché qui s'étend d'un point de départ initial jusqu'au point de départ actuel (12).

10. Procédé permettant de manœuvrer un véhicule automobile (1), dans lequel le véhicule automobile (1) est manœuvré de manière au moins semi-autonome le long d'une trajectoire (3) qui a été déterminée selon un procédé selon l'une quelconque des revendications 1 à 9.

11. Procédé selon la revendication 10, **caractérisé en ce que** le véhicule automobile (1) est manœuvré le long de la trajectoire (3) dans un premier sens de la marche si le véhicule automobile (1) a été déplacé dans un deuxième sens de la marche orienté à l'opposé du premier sens de la marche lors de la détermination de la trajectoire (3).

12. Procédé selon la revendication 10, **caractérisé en ce que** le véhicule automobile (1) est manœuvré le long de la trajectoire déterminée (3) si le point de départ (12) de la trajectoire (3) est reconnu dans l'environnement du véhicule automobile (1).

13. Système d'assistance au conducteur (2) pour un véhicule automobile (1), comprenant un contrôleur (5) et un dispositif de sortie (8), le système d'assistance au conducteur (2) étant conçu pour effectuer un procédé selon l'une quelconque des revendications 1 à 9 et/ou pour effectuer un procédé selon l'une quelconque des revendications 10 à 12.

14. Véhicule automobile (1) comprenant un système d'assistance au conducteur (2) selon la revendication 13.
